# EUROPÄISCHE PATENTSCHRIFT

(11) **EP 1 994 541 B1**
(45) Veröffentlichungstag und Bekanntmachung des Hinweises auf die Patenterteilung: **24.11.2010**
(21) Anmeldenummer: 07723131.4
(22) Anmeldetag: 09.03.2007
(51) Int. Cl.: H01H 36/00

(54) **SCHALTER, INSBESONDERE FAHRZEUGSCHALTER, AUSWERTEEINHEIT HIERFÜR UND ZUGEHÖRIGE SCHALTEREINHEIT**
SWITCH, IN PARTICULAR VEHICLE SWITCH, EVALUATION UNIT THEREFOR AND ASSOCIATED SWITCH UNIT
COMMUTATEUR, EN PARTICULIER COMMUTATEUR POUR VÉHICULE, UNITÉ D'ÉVALUATION POUR CE COMMUTATEUR ET UNITÉ À COMMUTATEUR CORRESPONDANTE

(30) Priorität: 13.03.2006 DE 102006012890
(43) Veröffentlichungstag der Anmeldung: 26.11.2008
(73) Patentinhaber: Valeo Schalter und Sensoren GmbH, 74321 Bietigheim-Bissingen (DE)
(72) Erfinder: MOZER, Reiner, 71665 Vaihingen/Enz (DE); HORST, Daniel, 74321 Bietigheim-Bissingen (DE); HEIN, Conny, 74321 Bietigheim-Bissingen (DE)
(74) Vertreter: Pothmann, Karsten
(86) Internationale Anmeldenummer: PCT/EP2007/002046
(87) Internationale Veröffentlichungsnummer: WO 2007/104480

(56) Entgegenhaltungen:
- EP-A1- 0 600 780
- FR-A- 1 457 361
- US-A- 3 371 336

## Beschreibung

Die Erfindung betrifft einen Schalter, insbesondere einen Fahrzeugschalter, mit einem mit einem Betätigungselement koppelbaren, um eine Drehachse drehbar gelagerten und in definierte, insbesondere einrastbare, Schaltstellungen bringbaren Schaltstück. Die Erfindung betrifft außerdem eine Schaltereinheit, umfassend einen derartigen Schalter samt Auswerteeinheit.

Schalter, insbesondere Fahrzeugschalter, sind in vielfältiger Art und Weise aus dem Stand der Technik vorbekannt. Dabei werden die vom Schalter erzeugten Schaltsignale in der Regel parallel übertragen und verarbeitet, wobei für jede Schaltstellung eine eigene Signalleitung erforderlich ist. Werden in den jeweiligen Schaltstellungen elektrische Kontakte geschlossen oder unterbrochen, so tritt hierbei Verschleiß auf. Zudem sind entsprechende Betätigungskräfte erforderlich, die einen entsprechenden Kontakt öffnen beziehungsweise schließen.

Aus der US 3 371 336 A ist ein Drehschalter bekannt geworden, der berührungslos schaltet und mehrere Dauermagnete aufweist. Ein ähnlicher Schalter ist aus der EP 0 600 780 A1 bekannt.

Bei bekannten Schaltern hat sich zudem als problematisch herausgestellt, dass die erzeugten Schaltsignale zur Übertragung an eine Auswerteeinheit, beziehungsweise in einer Auswerteeinheit widerstands- oder spannungscodiert werden, um sie dort digital verarbeiten zu können.

Der vorliegenden Erfindung liegt die Aufgabe zugrunde, einen eingangs genannten Schalter, insbesondere einen Fahrzeugschalter, derart weiterzubilden, dass zum einen ein dauerhaftes funktionssicheres Erkennen der einzelnen Schaltstellungen ermöglicht wird und zum anderen eine einfache Signalübertragung an eine Auswerteeinheit erreicht wird.

Diese Aufgabe wird durch einen Schalter mit den Merkmalen des Anspruchs 1 gelöst.

Ein derartiger Schalter weist ein um eine Drehachse drehbar gelagertes und in definierte, insbesondere einrastbare, Schaltstellungen bringbares Schaltstück auf, wobei das Schaltstück wenigstens einen mehrere Süd- und Nordpolabschnitte aufweisenden Dauermagneten umfasst. Ferner sind wenigstens zwei gegenüber dem Schaltstück ortsfest angeordnete Magnetfeldsensoren vorgesehen, deren Ausgangssignale je nach Schaltstellung des Schaltstücks davon abhängen, ob ein Süd- oder Nordpolabschnitt des wenigstens einen Dauermagneten im Erfassungsbereich des jeweiligen Magnetfeldsensors liegt. Die Ausgangssignale der Magnetfeldsensoren bilden dann in der jeweiligen Schaltstellung einen eindeutig bestimmbaren binären Schaltcode.

Ein derartiger Schalter hat den Vorteil, dass aufgrund des berührungslosen Erkennens der jeweiligen Schaltstellung durch die Magnetfeldsensoren kein Verschleiß auftritt. Ferner wird aufgrund der Ausgangssignale der Magnetfeldsensoren, die den binären Schaltcode bilden, erreicht, dass dieser Schaltcode unmittelbar einer entsprechenden Auswerteeinheit zur Verfügung gestellt werden kann. Aufgrund des eindeutig bestimmbaren Schaltcodes kann auf die jeweilige Schaltstellung des Schaltstücks eindeutig rückgeschlossen werden.

Zudem ist vorgesehen, dass der wenigstens eine Dauermagnet wenigstens teilweise als um die Drehachse angeordneter Magnetring oder Magnetringabschnitt ausgebildet ist. Bei Vorsehen von lediglich einem Dauermagneten ist dieser vorzugsweise auf einem Kreisring angeordnet. Finden mehrere Dauermagnete Verwendung, so können diese beispielsweise auf einem gemeinsamen Kreisring oder konzentrisch nebeneinander um eine gemeinsame Drehachse angeordnet sein. Dabei sind dann vorteilhafterweise die Magnetfeldsensoren axial neben dem und/oder radial um den Dauermagneten beziehungsweise die Dauermagneten angeordnet. Mittels einer derartigen Anordnung kann eine eindeutige Zuordnung der einzelnen Süd- oder Nordpolabschnitte zu den Magnetfeldsensoren erfolgen, wobei vergleichsweise wenig Bauraum beansprucht wird.

Gemäß einer weiteren vorzugsweisen Ausgestaltung der Erfindung sind die Süd- oder Nordpolabschnitte lückenlos nebeneinander angeordnet. Dies ist insbesondere dann vorteilhaft, wenn der oder die Dauermagnete als Magnetring oder Magnetringabschnitt ausgebildet sind. Vorteilhafterweise wird dadurch erreicht, dass in den Erfassungsbereichen der Magnetfeldsensoren stets entweder ein Süd- oder ein Nordpolabschnitt vorhanden ist. Insofern ergibt sich eine eindeutige Polerkennung durch den jeweiligen Magnetfeldsensor; entweder wird ein Nordpol oder ein Südpol erkannt. Dadurch, dass in jeder Schaltstellung des Schaltstücks entweder ein Südpolabschnitt oder ein Nordpolabschnitt einem Magnetfeldsensor zugeordnet ist, kann zudem ein ausreichend guter Schutz gegen äußere Störmagnetfelder, die zu einem verfälschten Schaltcode führen können, erreicht werden.

Gemäß einer weiteren Ausbildung der Erfindung ist denkbar, dass in einer Neutralstellung des Schaltstücks kein Süd- oder Nordpolabschnitt in den Erfassungsbereich der Magnetfeldsensoren vorhanden ist. Eine derartige Neutralstellung kann beispielsweise als Referenzpunkt vorgesehen sein, in dem die Magnetfeldsensoren eine Detektionslücke erkennen.

Die Süd- oder Nordpolabschnitte können gemäß einer weiteren Ausführungsform der Erfindung derart angeordnet sein, dass beim Verdrehen des Schaltstücks von einer Schaltstellung in eine benachbarte Schaltstellung sich der Schaltcode um lediglich ein Ausgangssignal eines Magnetfeldsensors ändert. Dabei entspricht grundsätzlich die Anzahl der Magnetfeldsensoren der Anzahl der Bits des Schaltcodes. Beim Schalten des Schaltstücks in eine benachbarte Schaltstellung ändert sich dann lediglich ein Bit des Schaltcodes.

Der Dauermagnet sieht beziehungsweise die Dauermagneten sehen dabei bei Vorsehen von zwei Magnetfeldsensoren vorzugsweise zwei Kreisringabschnitte mit je vier Polabschnitten vor, wobei dann mit den beiden Magnetfeldsensoren maximal vier hintereinander liegende Schaltstellungen erkannt werden können. Bei Vorsehen von drei Magnetfeldsensoren sind dann vorzugsweise drei Magnetringabschnitte vorhanden, welche jeweils vorzugsweise acht Polabschnitte aufweisen, wobei dann maximal acht Schaltstellungen erkannt werden können. Die einzelnen Magnetringabschnitte liegen dabei vorteilhafterweise hintereinander in einer Ebene.

Gemäß einer Weiterbildung der Erfindung kann vorgesehen sein, dass der Schalter einen Wellenabschnitt umfasst, auf dem das Schaltstück mit dem wenigstens einen Dauermagneten drehbar gelagert angeordnet ist. Dadurch wird gewährleistet, dass das Schaltstück sicher von einer Schaltstellung in eine benachbarte Schaltstellung überführt werden kann.

Ferner ist denkbar, dass Rastmittel vorgesehen sind, die das Schaltstück in der jeweiligen Schaltstellung lösbar rastend halten. Das Schaltstück kann aufgrund der Rastmittel dann definierte Schaltstellungen einnehmen. Die Rastmittel sind dabei vorzugsweise einerseits am Wellenabschnitt angeordnet und wirken andererseits gegen das Schaltstück.

Das Schaltstück kann aus Kunststoff ausgebildet sein, wobei dann der Dauermagnet in das Schaltstück eingeformt oder an diesem befestigt sein kann. Das Einformen des Dauermagneten in das Schaltstück hat den Vorteil, dass der Dauermagnet dauerhaft sicher geschützt ist.

Insbesondere ist der oder sind die Dauermagneten als kunststoffgebundene Magnete ausgebildet, die aus einem gespritztem, magnetisierten Kunststoffmaterialverbund sind. Dies hat den Vorteil, dass insbesondere bei Verwendung von lediglich einem Dauermagneten dieser in der vorgesehenen Form durch beispielsweise Spritzgießen hergestellt werden kann und anschließend mittels entsprechenden Vorrichtungen, wie beispielsweise Magnetisierungsspulen, an den jeweils vorgesehenen Abschnitten mit einem entsprechenden Pol versehen werden können.

Als Magnetfeldsensoren können beispielsweise auf einer Leiterplatte angeordnete Hall-Ics Verwendung finden. Bei Eintreten eines Nordpolabschnitts in den Erfassungsbereich eines Hall-Ics wird dieser beispielsweise eingeschaltet; bei Eintreten eines Nordpols in den Erfassungsbereich des Hall-Ics wird dieser beispielsweise wieder sicher ausgeschaltet.

Die eingangs genannte Aufgabe wird zudem gelöst durch eine Schaltereinheit, die einen erfindungsgemäßen Schalter sowie eine Auswerteeinheit umfasst, wobei die Auswerteeinheit aus dem jeweiligen Schaltcode eine zugehörige Schaltstellung bestimmt und einen entsprechenden Schaltvorgang einleitet. Die Auswerteeinheit kann dabei unmittelbar am Schalter angeordnet oder fern vom Schalter vorgesehen sein.

Vorteilhaft ist, wenn die Auswerteeinheit die Abfolge der Schaltcodes auf Plausibilität und/oder Redundanz überprüft. Dabei kann die Abfolge der Schaltcodes in der Auswerteeinheit hinterlegt sein, wobei dann beim tatsächlichen Schaltvorgang verglichen wird, ob die tatsächliche Abfolge der Schaltcodes mit der hinterlegten Abfolge der Schaltcodes übereinstimmt. Ferner kann überprüft werden, in welche Richtung das Schaltstück bewegt wird.

Die Auswerteeinheit kann gemäß der Erfindung den unmittelbar von den Magnetfeldsensoren erzeugten Schaltcode auswerten. Dies hat den Vorteil, dass keine Zwischencodierung und/oder keine Zwischenwandlung der Signale zu erfolgen hat. Allerdings ist von der Erfindung auch umfasst, dass der von den Magnetfeldsensoren erzeugte Schaltcode vor einer Auswertung durch die Auswerteeinheit in ein digitales Signal umgewandelt wird. Hierzu kann beispielsweise in A/D-Wandler und/oder eine entsprechende Widerstandscodierung Verwendung finden.

Weitere Einzelheiten und vorteilhafte Ausgestaltungen der Erfindung sind der nachfolgenden Beschreibung zu entnehmen, anhand derer das in den Figuren dargestellte Ausführungsbeispiel der Erfindung näher beschrieben und erläutert ist.

Es zeigen:
- Figur 1: einen Teillängsschnitt durch den Schalthebel eines Lenkstockschalters eines Kraftfahrzeugs;
- Figur 2: einen Querschnitt durch den Schalthebel gemäß Figur 1;
- Figur 3: den in den Figuren 1 und 2 gezeigten Dauermagneten in perspektivischer Darstellung mit zugehörigen Magnetfeldsensoren;
- Figur 4: eine Tabelle mit den binären Schaltcodes der Magnetfeldsensoren gemäß Figur 3 in verschiedenen Schaltstellungen; und
- Figur 5: eine schematische Darstellung einer erfindungsgemäßen Schaltereinheit mit Schalter und Auswerteeinheit.

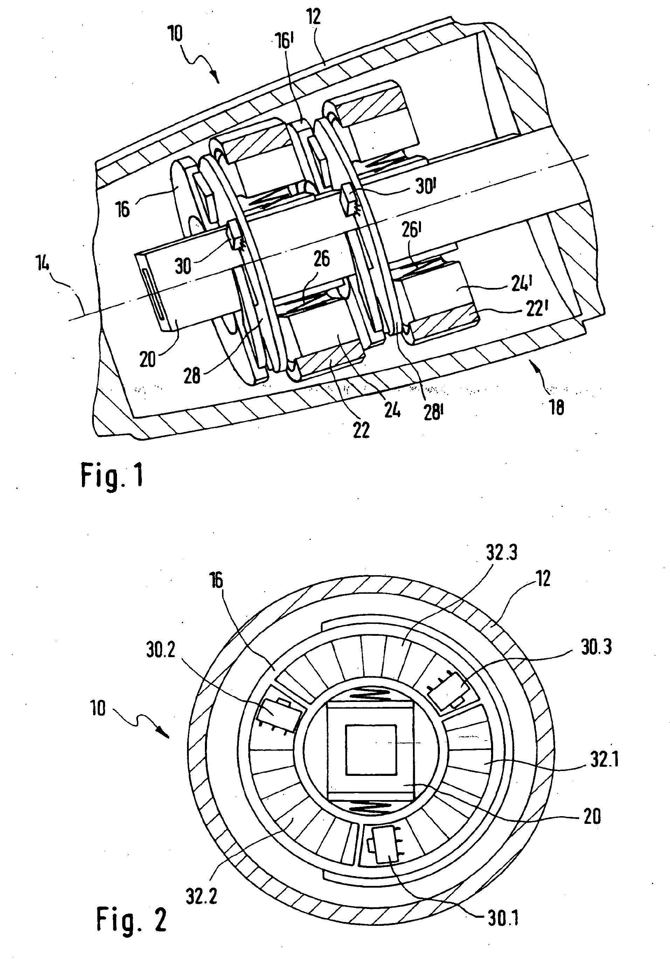

Der in den Figuren 1 und 2 dargestellte Drehschalter 10 ist an einem Schalthebel 18 eines Lenkstockschalters eines Fahrzeugs angeordnet Der Schalter 10 umfasst ein mit einem Betätigungselement 12 gekoppeltes, um eine Drehachse 14 drehbar gelagertes und in definierbare Schaltstellungen bringbares Schaltstück 16. Das Betätigungselement 12 ist dabei als um die Drehachse 14 drehbares Ringelement oder drehbare Ringkappe ausgebildet, die im Bereich des freien Endes des in der Figur 1 abschnittsweise dargestellten Schalthebels 18 angeordnet ist. Im Inneren des Schalthebels 18 ist dabei ein Wellenabschnitt 20 vorgesehen, um den das Betätigungselement 12 beziehungsweise das Schaltstück 16 wenigstens bedingt drehbar abgeordnet ist. Neben dem Schaltstück 16 ist dazu parallel ein weiteres Schaltstück 16' vorgesehen, das mit einem eigenen Betätigungselement drehbar gekoppelt sein kann. Gegebenenfalls können auf dem Wellenabschnitt 14 noch weitere entsprechende Schaltstücke 16 vorgesehen sein.

Um das Schaltstück 16 beziehungsweise das zugehörige Betätigungselement 12 in vordefinierte Schaltstellungen lösbar zu halten, sind Rastmittel vorgesehen, die einen schaltstück- beziehungsweise betätigungselementseitigen Hohlringabschnitt 22 umfassen, der an seiner radial innenliegenden Seite von Rastelementen 24 mittels sich am Wellenabschnitt 20 abstützenden Federelementen 26 beaufschlagt wird. In den jeweiligen Schaltpositionen können dabei an der Innenseite des Hohlringabschnitts 22 Rastausbuchtungen vorgesehen sein, in welche die Rastelemente lösbar einrasten können.

Den Schaltstücken 16 und 16' sind jeweils axial benachbart ringartig ausgebildete Leiterplatten 28, 28' angeordnet, auf denen jeweils drei äquidistant zueinander angeordnete Magnetfeldsensoren 30 beziehungsweise 30' angeordnet sind. Wie aus der Ansicht gemäß Figur 2 deutlich zu erkennen ist, schließen die drei Magnetfeldsensoren 30 jeweils einen Winkel von cirka 120° bezüglich der Drehachse 14 ein.

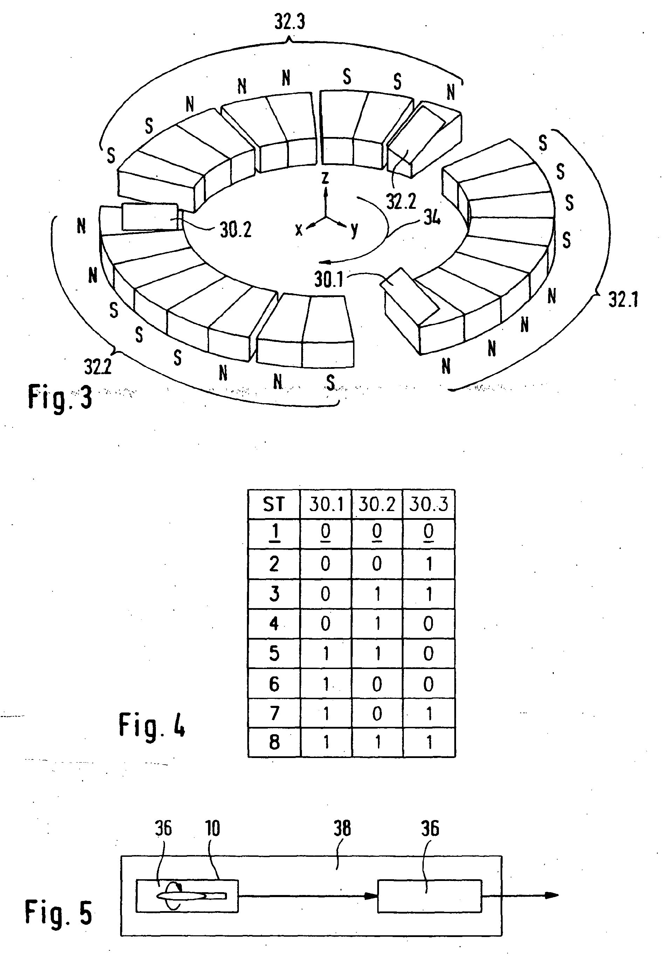

Wie insbesondere aus Figur 2 und 3 deutlich wird, umfasst das Schaltstück 16, 16' drei ringabschnittartig ausgebildete, in einer Ebene um die Drehachse 14 liegend angeordnete Dauermagneten 32.1., 32.2 und 32.3. Anstelle von drei einzelnen Dauermagneten kann erfindungsgemäß auch vorgesehen sein, dass lediglich ein ringartig ausgebildeter, geschlossener Dauermagnet Verwendung findet. Jedem Magnetringabschnitt 32.1., 32.2 und 32.3 ist ein Magnetfeldsensor 30.1., 30.2 und 30.3 zugeordnet. Die Ausgangssignale der Magnetfeldsensoren hängen je nach Schaltstellung des Schaltstücks 16 davon ab, ob ein Süd- oder Nordpolabschnitt des jeweiligen Magnetringabschnitts im Erfassungsbereich des jeweils zugehörigen Magnetfeldsensors liegt. Die Ausgangssignale der drei Magnetfeldsensoren bilden in der jeweiligen Schaltstellung einen eindeutig bestimmbaren binären Schaltcode.

In der Figur 3 sind die drei Magnetringabschnitte 32.1, 32.2 und 32.3 mit den jeweiligen Nordpolabschnitten N und Südpolabschnitten S dargestellt. Ferner sind die zugehörigen Magnetfeldsensoren 30.1, 30.2 und 30.3 gezeigt. Jeder Magnetringabschnitt weist dabei insgesamt acht Polabschnitte auf, die lückenlos nebeneinander liegend angeordnet sind. In der in der Figur 3 dargestellten Schaltstellung ST1 sind in den Erfassungsbereichen der drei Magnetfeldsensoren 30.1, 30.2 und 30.3 jeweils ein Nordpol N vorhanden. Durch Verdrehen des Schaltstücks 16 beziehungsweise der drei Magnetringabschnitte in Richtung des Pfeils 34 kann der Schalter in die weiteren Schaltstellungen ST2 bis ST8 gebracht werden.

Bei den Magnetringabschnitte 32.1, 32.2 und 32.3 handelt es sich um kunststoffgebundenen Magnete, die in das aus Kunststoff ausgebildete Schaltstück 14 eingebettet bzw. eingegossen sind. Zur Herstellung der Magnetringabschnitte 32.1, 32.2 und 32.3 wird magnetiserbar Masse in die vorgesehenen Formen gespritzt. Anschießend kann diese Masse mit einer geeigneten Magnetisierungsvorrichtung an den jeweiligen Abschnitten mit einem Nord- oder Südpol magnetisiert werden. Die in der Figur 3 gezeigten Südpolabschnitte S und Nordpolabschnitte N sind dabei lediglich auf der den Magnetfeldsensoren 32.1, 32.2 und 32.3 zugewandten Seite des Dauermagneten vorhanden; auf der den Magnetfeldsensoren 32.1, 32.2 und 32.3 abgewandten Seite befindeten sich die jeweiligen Bipole mit dazu umgekehrten Vorzeichen. Die Bipole der in der Figur 3 gezeigten Nord- und Südpolabschnitte sind in der Figur 3 nicht dargestellt.

Der zur Figur 3 zugehörigen Tabelle gemäß Figur 4 ist zu entnehmen, dass in der Schaltstellung ST1 die drei Magnetfeldsensoren 30.1., 30.2 und 30.3 aufgrund der in den Erfassungsbereichen vorhandenen Nordpolabschnitte N jeweils als Ausgangssignale den Wert 0 aufweisen. Der zugehörige Schaltcode in dieser Schaltstellung ST1 lautet folglich 000. Wird nun das Schaltstück 16 gemäß Figur 3 in Richtung des Pfeils 34 in die der Schaltstellung ST1 benachbarte, zweite Schaltstellung ST2 bewegt, so ändert sich der binäre Schaltcode beim Magnetfeldsensor 30.3 um ein Bit; in der Erfassungsbereich des Magnetfeldsensors 30.3. gelangt nun ein Südpolabschnitt S. Insofern ergibt sich in der Schaltstellung ST2 der binäre Schaltcode 001. In der Schaltstellung ST3 ändert sich dann der Schaltcode um ein weiteres Bit im Erfassungsbereich des Magnetfeldsensors 30.2; der Schaltcode lautet dann 011. Wie der Tabelle gemäß Figur 4 entnommen werden kann, verändern sich aufgrund der entsprechend gewählten Anordnung der Nordpol- und Südpolabschnitte beim weiteren Verdrehen des Schaltstücks von einer Schaltstellung in eine benachbarte Schaltstellung der Schaltcode immer lediglich um ein Ausgangssignal eines Magnetfeldsensors beziehungsweise um lediglich ein Bit. Bei Vorsehen von drei Magnetfeldsensoren können insgesamt maximal acht verschiedene Schaltstellungen ST1 bis ST8 eindeutig erkannt werden.

Zur Auswertung der von dem Schalter 10 erzeugten Schaltcode findet gemäß Figur 5 eine Auswerteeinheit 36 Verwendung, die aus den Ausgangssignalen der drei Magnetfeldsensoren beziehungsweise aus den zugehörigen Schaltcoden die jeweilige Schaltstellung bestimmt und entsprechende Schaltvorgänge einleitet. Die Auswerteeinheit 36 kann dabei die Abfolge der Schaltcode auf Plausibilität überprüfen. Dazu ist vorteilhaft, wenn die Abfolge der Schaltcode in der Auswerteeinheit 36 hinterlegt ist. Gerade dann, wenn sich, wie in Figur 3 und 4 der Schaltcode von zwei benachbarten Schaltstellungen um lediglich ein Bit ändert, kann eine entsprechende Überprüfung des Schaltvorgangs auf einfache Art und Weise erfolgen. Die von den Magnetfeldsensoren erzeugten Schaltsignale können dabei direkt der Auswerteeinheit 36 zur Verfügung gestellt werden oder mittels entsprechenden Wandlern in digitale Signale umgewandelt werden. Der Schalter 10 und die entsprechende Auswerteeinheit 36 sind dabei Bestandteile der Schaltereinheit 38. Die Auswerteeinheit 36 kann dabei beispielsweise auf der Leiterplatte, auf der die Magnetfeldsensoren angeordnet sind, oder fern von dieser angeordnet sein.

## Patentansprüche

1. Schalter (10), insbesondere Fahrzeugschalter, mit einem mit einem Betätigungselement (12) koppelbaren, um eine Drehachse (14) drehbar gelagerten und in definierte Schaltstellungen bringbaren Schaltstück (16), wobei das Schaltstück (16) wenigstens einen mehrere Süd- und Nordpolabschnitte (S, N) aufweisenden Dauermagneten (32) umfasst, und mit wenigstens zwei gegenüber dem Schaltstück (16) ortsfest angeordneten Magnetfeldsensoren (30), deren Ausgangssignale je nach Schaltstellung des Schaltstücks (16) davon abhängen, ob ein Süd- oder Nordpolabschnitt (S, N) des wenigstens einen Dauermagneten (32) im Erfassungsbereich des jeweiligen Magnetfeldsensors (30) liegt und deren Ausgangssignale in der jeweiligen Schaltstellung einen eindeutig bestimmbaren binären Schaltcode bilden, **dadurch gekennzeichnet, dass** der wenigstens eine Dauermagnet (32) wenigstens teilweise als um die Drehachse (14) angeordneter Magnetring oder Magnetringabschnitt (32.1, 32.2, 32.3) ausgebildet ist.

2. Schalter (10) nach Anspruch 1, **dadurch gekennzeichnet, dass** die Süd- und/oder Nordpolabschnitte (S, N) des wenigstens einen Dauermagneten (32) lückenlos nebeneinander liegend angeordnet sind.

3. Schalter (10) nach Anspruch 1 oder 2, **dadurch gekennzeichnet, dass** in einer Neutralstellung des Schaltstücks kein Süd- oder Nordpolabschnitt des Dauermagneten in den Erfassungsbereichen der Magnetfeldsensoren vorhanden ist.

4. Schalter (10) nach einem der vorhergehenden Ansprüche, **dadurch gekennzeichnet, dass** die Süd- und Nordpolabschnitte derart angeordnet sind, dass beim Verdrehen des Schaltstücks (16) von einer Schaltstellung in eine benachbarte Schaltstellung sich der Schaltcode um lediglich ein Ausgangssignal eines Magnetfeldsensors (30) ändert.

5. Schalter (10) nach einem der vorhergehenden Ansprüche, **dadurch gekennzeichnet, dass** der Schalter zwei Magnetfeldsensoren (30) und maximal vier Schaltstellungen oder drei Magnetfeldsensoren (30.1, 30.2, 30.3) und maximal acht Schaltstellungen (ST1-ST8) umfasst.

6. Schalter (10) nach einem der vorhergehenden Ansprüche, **dadurch gekennzeichnet, dass** der Schalter einen Wellenabschnitt (20) umfasst, auf dem das Schaltstück (16) drehbar gelagert angeordnet ist.

7. Schalter (10) nach einem der vorhergehenden Ansprüche, **dadurch gekennzeichnet, dass** Rastmittel (22, 24, 26) vorgesehen sind, die das Schaltstück (16) in der jeweiligen Schaltstellung halten.

8. Schalter (10) nach einem der vorhergehenden Ansprüche, **dadurch gekennzeichnet, dass** das Schaltstück (16) aus Kunststoff ausgebildet ist und/oder dass der oder die Dauermagneten (18)als kunststoffgebundene Magnete ausgebildet sind, die in das Schaltstück (16) eingeformt.oder an diesem befestigt sind.

9. Schalter (10) nach einem der vorhergehenden Ansprüche, **dadurch gekennzeichnet, dass** die Magnetfeldsensoren (30) als auf einer Leiterplatte angeordnete Hall-ICs ausgebildet sind.

10. Schaltereinheit (38) umfassend einen Schalter (10) nach wenigstens einem der Ansprüche 1 bis 9 und eine Auswerteeinheit (36), die aus dem jeweiligen Schaltcode eine zugehörige Schaltstellung bestimmt und einen entsprechenden Schaltvorgang einleitet.

11. Schaltereinheit (38) nach Anspruch 10, **dadurch gekennzeichnet, dass** sie die Abfolge der Schaltcodes auf Plausibilität und/oder Redundanz überprüft.

12. Schaltereinheit (38) nach einem der Ansprüche 10 oder 11, **dadurch gekennzeichnet, dass** die Auswerteeinheit den unmittelbar von den Magnetfeldsensoren (30) erzeugten Schaltcode auswertet.

13. Schaltereinheit (38) nach einem der Ansprüche 10 oder 11, **dadurch gekennzeichnet, dass** der von den Magnetfeldsensoren (30) erzeugte Schaltcode vor einer Auswertung durch die Auswerteeinheit in ein digitales Signal umgewandelt wird.

## Claims

1. Switch (10), in particular vehicle switch, having a switching component (16) which can be coupled to an operating element (12), is mounted such that it can rotate about a rotation axis (14) and can be moved to defined switching positions, with the switching component (16) comprising at least one permanent magnet (32) which has a plurality of south and north pole sections (S, N), and having at least two magnetic field sensors (30) which are arranged in a fixed position in relation to the switching component (16) and of which the output signals, in each case in accordance with the switching position of the switching component (16), depend on whether a south or north pole section (S, N) of the at least one permanent magnet (32) is in the detection region of the respective magnetic field sensor (30), and of which the output signals form a binary switching code, which can be clearly determined, in the respective switching position, **characterized in that** the at least one permanent magnet (32) is at least partly in the form of a magnet ring or magnet ring section (32.1, 32.2, 32.3) which is arranged around the rotation axis (14).

2. Switch (10) according to Claim 1, **characterized in that** the south and/or north pole sections (S, N) of the at least one permanent magnet (32) are arranged next to one another without gaps.

3. Switch (10) according to Claim 1 or 2, **characterized in that**, in a neutral position of the switching component, there is no south or north pole section of the permanent magnet in the detection regions of the magnetic field sensors.

4. Switch (10) according to one of the preceding claims, **characterized in that** the south and north pole sections are arranged in such a way that, when the switching component (16) is turned from one switching position to an adjacent switching position, the switching code changes by only one output signal of a magnetic field sensor (30).

5. Switch (10) according to one of the preceding claims, **characterized in that** the switch comprises two magnetic field sensors (30) and at most four switching positions, or three magnetic field sensors (30.1, 30.2, 30.3) and at most eight switching positions (ST1-ST8).

6. Switch (10) according to one of the preceding claims, **characterized in that** the switch comprises a shaft section (20) on which the switching component (16) is arranged such that it can rotate.

7. Switch (10) according to one of the preceding claims, **characterized in that** latching means (22, 24, 26) are provided, the said latching means holding the switching component (16) in the respective switching position.

8. Switch (10) according to one of the preceding claims, **characterized in that** the switching component (16) is formed from plastic, and/or **in that** the permanent magnet or magnets (18) is/are in the form of plastic-bound magnets which are integrally formed in the switching component (16) or are attached to the said switching component.

9. Switch (10) according to one of the preceding claims, **characterized in that** the magnetic field sensors (30) are in the form of Hall ICs which are arranged on a printed circuit board.

10. Switch unit (38) comprising a switch (10) according to at least one of Claims 1 to 9 and an evaluation unit (36) which determines an associated switching position from the respective switching code and initiates a corresponding switching process.

11. Switch unit (38) according to Claim 10, **characterized in that** it checks the sequence of the switching code for plausibility and/or redundancy.

12. Switch unit (38) according to either of Claims 10 and 11, **characterized in that** the evaluation unit evaluates the switching code generated directly by the magnetic field sensors (30).

13. Switch unit (38) according to either of Claims 10 and 11, **characterized in that** the switching code generated by the magnetic field sensors (30) is converted into a digital signal before being evaluated by the evaluation unit.

## Revendications

1. Interrupteur (10), notamment interrupteur de véhicule automobile, comportant une pièce de contact (16) pouvant être couplée avec un élément d'actionnement (12), positionnée rotativement autour d'un axe de rotation (14) et pouvant être amenée à des positions de commutation définies, la pièce de contact (16) comprenant au moins un aimant permanent (32) présentant plusieurs portions de pôle nord et de pôle sud (S,N), et comportant au moins deux capteurs de champ magnétique (30) disposés de manière stationnaire par rapport à la pièce de contact (16), dont les signaux de sortie selon la position de commutation de la pièce de contact (16) dépendent de ce que une portion de pôle nord ou sud (S,N) dudit au moins un aimant permanent (32) est située dans la zone de détection du capteur de champ magnétique (30) respectif et dont les signaux de sortie dans la position de commutation respective forment un code de commutation binaire pouvant être déterminé sans équivoque, **caractérisé en ce que** ledit au moins un aimant permanent (32) est réalisé au moins partiellement comme un aimant en anneau disposé autour de l'axe de rotation (14) ou une portion d'aimant en anneau (32.1, 32.2, 32.3).

2. Interrupteur (10) selon la revendication 1, **caractérisé en ce que** les portions de pôle nord et/ou sud (S,N) dudit au moins un aimant permanent (32) sont disposées en juxtaposition les unes à côté des autres sans espace vide.

3. Interrupteur (10) selon la revendication 1 ou 2, **caractérisé en ce que** dans une position neutre de la pièce de contact, aucune portion de pôle nord ou sud de l'aimant permanent n'est présente dans les zones de détection des capteurs de champ magnétique.

4. Interrupteur (10) selon une des revendications précédentes, **caractérisé en ce que** les portions de pôle nord et sud sont disposées de telle sorte que lorsque la pièce de contact (16) est tournée d'une position de commutation dans une position de commutation voisine, le code de commutation varie uniquement d'un signal de sortie d'un capteur de champ magnétique (30).

5. Interrupteur (10) selon une des revendications précédentes, **caractérisé en ce que** l'interrupteur comprend deux capteurs de champ magnétique (30) et au maximum quatre positions de commutation ou trois capteurs de champ magnétique (30.1, 30.2, 30.3) et au maximum huit positions de commutation (ST1-ST8).

6. Interrupteur (10) selon une des revendications précédentes, **caractérisé en ce que** l'interrupteur comprend une portion d'arbre (20), sur laquelle la pièce de contact (16) est disposée en étant positionnée rotativement.

7. Interrupteur (10) selon une des revendications précédentes, **caractérisé en ce que** des moyens d'encliquetage (22,24,26) sont prévus, qui maintiennent la pièce de contact (16) dans la position de commutation respective.

8. Interrupteur (10) selon une des revendications précédentes, **caractérisé en ce que** la pièce de contact (16) est réalisée en plastique et/ou le ou les aimants permanents (18) est (sont) réalisé(s) comme des aimants liés au plastique, qui sont façonnés dans la pièce de contact (16) ou fixés sur celle-ci.

9. Interrupteur (10) selon une des revendications précédentes, **caractérisé en ce que** les capteurs de champ magnétique (30) sont réalisés comme des Hall-ICs disposés sur une plaque conductrice.

10. Unité d'interrupteur (38) comprenant un interrupteur (10) selon au moins une des revendications 1 à 9 et une unité d'évaluation (36), qui détermine une position de commutation afférente d'après le code de commutation respectif et déduit un processus de commutation correspondant.

11. Unité d'interrupteur (38) selon la revendication 10, **caractérisée en ce qu'**elle contrôle la plausibilité et/ou la redondance de la séquence de code de commutation.

12. Unité d'interrupteur (38) selon une des revendications 10 ou 11, **caractérisée en ce que** l'unité d'évaluation évalue le code de commutation généré directement par les capteurs de champ magnétique (30).

13. Unité d'interrupteur (38) selon une des revendications 10 ou 11, **caractérisée en ce que** le code de commutation généré par les capteurs de champ magnétique (30) est converti avant une évaluation par l'unité d'évaluation en un signal numérique.
